# EUROPEAN PATENT SPECIFICATION

(11) **EP 3 028 022 B1**
(45) Date of publication and mention of the grant of the patent: **23.10.2019**
(21) Application number: 14750157.1
(22) Date of filing: 22.07.2014
(51) Int. Cl.: G01K 5/34

(54) **WIDE-RANGE PRECISION CONSTANT VOLUME GAS THERMOMETER**
GASTHERMOMETER MIT WEITREICHENDER GENAUIGKEIT UND KONSTANTEM VOLUMEN
THERMOMÈTRE À GAZ À VOLUME CONSTANT À PRÉCISION ÉTENDUE

(30) Priority: 29.07.2013 US 201361859349 P
(43) Date of publication of application: 08.06.2016
(73) Proprietor: Rüeger S.A., 1023 Crissier (CH)
(72) Inventor: WILLING, Bert, CH-1807 Blonay (CH)
(74) Representative: Klocke, Peter
(86) International application number: PCT/EP2014/065719
(87) International publication number: WO 2015/014672

(56) References cited:
- DE-A1- 19 927 841
- DE-U1- 9 209 083
- FR-A1- 2 722 567

## Description

### Field of the Invention

The invention concerns a Constant Volume Gas Thermometer (CVGT) comprising a gas cartridge, a pressure measurement device, and a capillary, which connects the gas cartridge to the pressure measurement device according to the preamble of claim 1 for measuring the temperature of a liquid or of a gas over a wide range with very high precision.

### Background

Precision thermometers usually cover a limited measurement range. Their measurement principles are mostly based on the change of resistivity with temperature. For low-temperature applications the resistivity of semiconductors is used, whereas for temperatures from ambient to combustion temperatures, the resistivity of metals is employed. Both variants are limited in their respective temperature ranges and are clumsy to combine.

However, many industrial process applications would benefit from precision thermometers, which span from freezing temperatures up to combustion temperatures, or from ambient temperatures down to below superfluid helium temperatures.

### State of the Art

Precision thermometers for process applications are based on the measurement of the resistance of a selected sensor probe.

In the case of ambient to high temperatures, the selected sensor probe is typically made out of a platinum film and yields a highly linear increase of resistance with temperature. Its upper limit of operation is about 900-950 K, above which the structure of the platinum film becomes unstable. Although the lower limit of operation is around 70 K, the precision of the temperature measurement suffers due to the decreasing absolute resistance value.

At low to cryogenic temperatures, the sensor probes are typically made out of various semiconductors. Their resistance increases exponentially with decreasing temperature, which makes a measurement relatively easy. However, calibration has to be made very carefully, and the strongly nonlinear character of the resistance versus temperature makes that several different semiconductor sensor probes have to be employed in order to cover the range from ambient temperature to around 1 K. Additionally, the heat dissipation of a resistive sensor probe, and the heat conduction of its copper wires cause problems of temperature stabilization in the temperature range from condensation of helium and below.

A thermometer based on a single resistive sensor probe can therefore not be employed to cover the range from 1 K to ambient, or from cryogenic to combustion temperatures.

Constant Volume Gas Thermometers (CVGT's) are based on the fact that the pressure inside an enclosed gas volume increases proportionally with temperature. Constant Volume Gas Thermometers (CVGT) according to the preamble are disclosed in DE 92 09 083 U1 and FR 2 722 567 A1.

For the case that the gas volume is filled with Helium, the CVGT operates as closely as possible to the ideal gas law, with the gas pressure being a highly linear function of the absolute temperature over a range easily exceeding 1'000 K.

A CVGT typically comprises three basic elements: a gas cartridge which is subjected to the temperature to be measured (the object temperature) and which contains the constant volume of gas, a pressure measurement device, and a capillary, which depending on the application may be several centimeters to several tens of meters long and which connects the gas cartridge to the pressure measurement device.

A major setback of a CVGT is connected to the measurement of the pressure. Usually, the pressure is measured by a so-called bourdon, and the movement of the bourdon under changing temperature and pressure is translated via a mechanical gear into the rotation of a hand on a display. The bourdon requires high absolute pressure changes due to its low pressure sensitivity, and typical gas pressures of the CVGT are 5 MPa to 20 MPa (50 to 200 bar). Below 5 MPa (50 bar), the sensitivity of the bourdon is not sufficient for a precise measurement, and within the operational range, the mechanical gear introduces a relatively large error of 1-2 % of full scale.

The second major setback of a CVGT is the fact that the gas volume inside the capillary and the bourdon form a so-called parasitic volume. In contrast to the gas volume of the gas cartridge, the parasitic volume is not at the object temperature, and as the two volumes are connected and are at the same pressure, the linear relation between object temperature and gas pressure is compromised. This error increases with increasing ratio of parasitic volume to gas cartridge volume, and with an increasing difference in temperature between object temperature and the actual temperature of the pressure measurement device. As both values are rarely known, the precision of such a CVGT can greatly suffer.

### Object of the Invention

The object of the present invention is to provide a CVGT, which allows the measurement of temperature with high precision over a wide temperature range with a single thermometer.

### Summary of the Invention

The above mentioned object is solved by the present invention as claimed in claim 1. Further advantageous features are claimed in the respective subclaims.

In view of the above, the CVGT for measuring the temperature with high precision over a wide temperature range comprises a first pressure measurement device, which comprises a mechanical assembly forming a membrane. The capillary tube communicates with the bottom side of the membrane and a pressure measurement element on the membrane generates a signal in dependence of a deformation of the membrane. Further, the CVGT comprises electronic means for reading and correlating the signal of said pressure measurement element to the temperature of the gas cartridge. The gas volume inside the first pressure measurement device is minimized by careful design and tight tolerances. Additionally the CVGT comprises a second pressure measurement device being designed as a Pirani sensor that is connected either directly or indirectly to the gas cartridge and to means to relate a signal of said second pressure measurement device to the temperature of the gas cartridge. Preferably, the second pressure measurement device is enclosed in a volume of a hermetically sealed enclosure and the volume is connected through a third capillary tube either directly or indirectly to the gas cartridge.

Most preferably, the second pressure measurement device is arranged in a cavity situated on the bottom side of the membrane.

Regarding the second pressure measurement device, it is proposed that electronic means measure the power consumption of the Pirani sensor at constant temperature, and connect said power consumption to the temperature of the gas cartridge. Preferably, the electrical leads of the Pirani sensor are contacted via gas-tight feedthroughs and the power consumption of said Pirani pressure sensor is connected to the temperature of the gas cartridge. Advantageously, the Pirani sensor is a micro-machined silicon hotplate and the gas volume around the Pirani sensor is minimized.

According to an embodiment, the pressure measuring element is a resistive thin film strain gauge deposited onto a stainless steel membrane of defined diameter and thickness, said membrane being subject to the gas pressure of the gas cartridge via the capillary tube.

According to another embodiment, the pressure measuring element is a piezoresistive thin film strain gauge deposited onto said stainless steel membrane.

According to a further embodiment of the invention, a resistive thermometer is deposited onto the mechanical assembly forming the membrane, which measures the temperature of the mechanical assembly.

In another preferred embodiment of the invention, a thin-film resistor is arranged onto the mechanical assembly, which is operated electrically in series with the strain gauge and of which its variation with temperature is used to compensate temperature effects on the signal of the strain gauge.

According to a further embodiment of the invention, a capillary tube connecting element at the bottom side of the membrane provides communication of the capillary tube with the bottom side of the membrane.

Preferably, the gas cartridge contains pure helium or argon.

In another advantageous embodiment of the invention, the gas cartridge comprises a second capillary tube for filling gas into the volume created by the gas cartridge, the first capillary tube, and the mechanical assembly.

### Detailed Description of the Invention

The invention is based on a CVGT, which incorporates a high-precision pressure measurement device. The pressure measurement device comprises typically a thin film strain gauge deposited onto a stainless steel membrane, where the stainless steel membrane is subject to the gas pressure from underneath.

Such a thin film strain gauge can measure gas pressures in ranges, which are determined by the choice of the stainless steel of the membrane, and by its geometrical dimensions. In order to maintain a high precision measurement, the dimensions of the membrane are designed such that at maximum allowable gas pressure, the deformation of the membrane remains strictly elastic. The accuracy of a typical thin film strain gauge deposited on an appropriate stainless steel membrane is typically on the order of 0.05-0.1% of the full measurement scale. The measurement range goes typically from maximum design pressure down to about 2-3% of this value.

By careful design of the pressure measurement device, as well as tight manufacturing tolerances, the parasitic volume associated with the pressure measurement device can be limited to very small values which decreases the measurement error associated to the parasitic volume or, may allow for a smaller gas cartridge. Preferably, the gas cartridge, the capillary tube and the body of the pressure measurement device are made of stainless steel.

Moreover, during the same processing step of the deposition of the thin film strain gauge, one can deposit a thin film resistive thermometer on a part of the surface of the pressure measurement device, which is not subject to a deformation by the gas pressure. The knowledge of the actual temperature of the pressure measurement device then allows for an analytical correction of the error induced by the parasitic volume of the pressure measurement device.

The measurement range of the CVGT is defined by the initial filling pressure of the helium gas at room temperature, as well as the maximum allowable gas pressure during operation. With a filling pressure of 5 MPa (50 bar) at 300 K and a maximum pressure of 20 MPa (200 bar), the measurement range of the CVGT will be 25 - 1'200 K, whereas a filling pressure of 15 MPa (150 bar) at 300 K will yield a measurement range from 5 - 400 K. For practicable embodiments, the upper limit of the temperature range will be around 1'000 K to 1'100 K, which is a typical limit for the stainless steels used for the gas cartridge and the capillary.

To extend the measurement range to lower temperatures, the filling pressure at 300 K is adapted to an appropriate value such that the helium is at least slightly supercritical when the object temperature is decreased to the critical point of helium at 5.2 K. Appropriate filling pressures for such a configuration are 13 MPa (130 bar) or higher.

Upon reaching an object temperature of 5.2 K, the helium will start to condensate and the pressure inside the CVGT will adjust to the equilibrium vapor pressure of helium, which decreases from 27.2 kPa (2.272 bar) at 5.2 K to 15.57 Pa (0.1557 mbar) at 1 K.

For pressures in the range below 1 bar, the pressure measurement device based on a stainless steel membrane and a thin film strain gauge, which is designed to small maximum flexions at 20 MPa (200 bar), will not provide accurate readings.

To measure pressures below 0.1 MPa (1 bar) inside the CVGT with sufficient accuracy, the CVGT according to the invention may include a second pressure measurement device which is based on the Pirani measurement principle. A Pirani measurement device measures the thermal conductivity of the surrounding gas. To this end, a thermally insulated wire or surface is heated electrically to a defined temperature, while the surrounding gas is at ambient temperature. If the thermal conductivity of the surrounding gas changes, either the Pirani element's temperature changes, or the electrical heating power needs to be adapted in order to maintain the Pirani element's temperature.

In absence of a gas flow or a change of the chemical composition of the gas, a change of the thermal conductivity of a gas can only be caused by a change of its pressure. However, a pressure change will only lead to a variation of the thermal conductivity of the gas for pressure ranges where the mean free path length of the gas molecules is on the order of the geometrical dimensions of the Pirani element's enclosure. Pirani measurement devices are therefore typically used to measure pressure ranges between 0.1 Pa (1 µbar) and 0.1 MPa (1 bar).

In the CVGT according to the invention, an otherwise hermetically sealed enclosure of the Pirani measurement device is connected via an additional capillary tube to the gas volume in the cartridge of the CVGT, or it is situated in a cavity underneath the membrane of the main pressure measurement device and connected by that way via the capillary tube to the main pressure measurement device and to the cartridge. Electrical connections to the Pirani measurement device are made by appropriately sealed and insulated connectors in the Pirani measurement devices enclosure.

In contrary to a membrane-based pressure measurement device which measures the differential pressure between the two sides of the membrane, the Pirani measurement device measures absolute pressure. Even though its measurement range is limited to low pressures, it shows a virtually unlimited mechanical resistance to very high pressures. It can therefore easily be incorporated into a CVGT which develops internal pressures of several hundreds of bar.

As the Pirani measurement devices enclosure will add to the parasitic volume of the CVGT, its size has to be minimized. The preferred Pirani measurement device according to our invention is therefore a silicon micro-machined hotplate based on a thin membrane. Its advantage is its small volume of less than 1 mm³, its integrated temperature sensor for ambient temperature, its easily adjustable measurement range, and its low cost.

The CVGT according to our invention is therefore capable to measure temperatures of up to several hundred Kelvin with an accuracy of 0.1 % or better, and with the optional Pirani measurement device it is capable to measure cryogenic temperatures down to 1 Kelvin and less with a similar accuracy.

The following description and the annexed drawings set forth in detail certain illustrative embodiments of the invention. These embodiments are indicative, however, of but a few of the various ways in which the principles of the invention may be employed. Other objects, advantages, and features of the invention will become apparent from the following detailed description of the invention when considered in conjunction with the drawings.

### Short Description of the Drawings

The Figures 1 to 3 show schematically the principle of the invention as illustrations in which
- Figure 1: shows the CVGT with a first pressure measurement device;
- Figure 2: shows the CVGT with a first and a second pressure measurement device, where the second measurement device is connected to the gas cartridge by a separate capillary tube; and
- Figure 3: shows the CVGT with a first and a second pressure measurement device, where the second measurement device is integrated into a cavity underneath the membrane of the first pressure measurement device.

### Detailed Description of the Drawings of the Invention

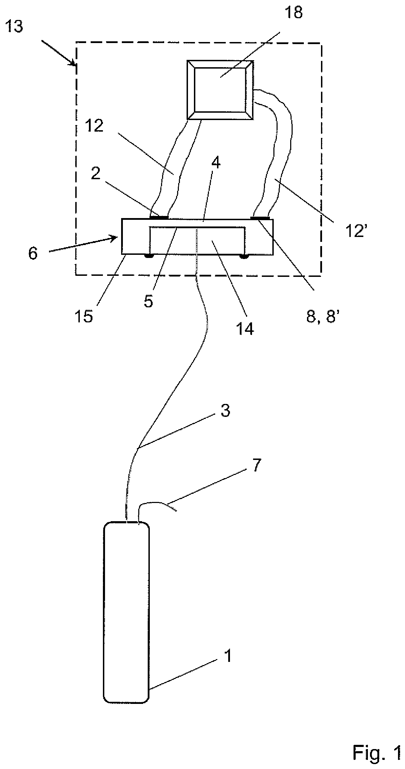

A CVGT for a precision temperature measurement over a wide temperature range comprises in an example as pictured in Figure 1, a gas cartridge 1 connected to a first pressure measurement device 13 by a first capillary tube 3, which is typically made of stainless steel. The dimensions of this first capillary tube may be adapted to the application; its inner diameter typically ranges between 0.01 mm and 0.1 mm, and its length typically ranges from several centimeters to several tens of meters.

The first pressure measurement device 13 comprises a pressure measurement element 2, which is a strain gauge deposited preferably as thin-film metal layer on top of a stainless steel membrane 4. The bottom side 5 of the membrane 4 is connected via a first capillary 3 to the gas cartridge 1 so that the membrane 4 and the pressure measurement element 2 are both thermally separated from the gas cartridge 1.

The parasitic volume formed by the first capillary 3 and the bottom side 5 of the membrane 4 is minimized by a small inner diameter of the capillary 3, and by tight matching tolerances of the mechanical assembly 6 forming the membrane 4. A capillary tube connecting element 14 arranged at the bottom side 5 of the membrane 4 and fixed by welding to the body 15 of the mechanical assembly 6 provides communication of the capillary tube 3 with the bottom side 5 of the membrane 4.

All mechanical connections of the CVGT assembly are either welded or hard soldered in order to obtain a hermetic sealing of the filling gas. The filling gas is preferably helium or argon. The pressurized gas filling is put into the CVGT assembly by a second capillary tube 7 which is connected either to the gas volume underneath the membrane 4, or to the first capillary 3, or preferentially to the gas cartridge 1. After filling the CVGT assembly with gas at the required pressure, the second capillary 7 is permanently sealed off by welding or hard soldering. The remaining volume of the second capillary 7 also forms part of the parasitic volume if connected to the first capillary 3 or the volume underneath the membrane 4. However, if the second capillary 7 is connected in an appropriate manner to the gas cartridge 1, it will be part of the constant gas volume and not of the parasitic volume.

During operation of the thermometer, the pressure measurement element 2 produces a signal, which is mainly proportional to the absolute temperature of the gas cartridge 1. If designed properly, the pressure measurement element 2 will measure the pressure with an accuracy of 0.1 % or better of the full scale, where the full scale of the pressure measurement element 2 typically corresponds to a flexion of the membrane 4 at its border of 0.15 %.

In a preferred variation of the embodiment, a thin film resistor 8 is deposited on the body 15 the mechanical assembly 6 such that it is not subject to the flexion of the membrane 4. The variation of the resistance of the thin film resistor 8 is used to determine the actual temperature of the mechanical assembly 6 and the first pressure measurement element 2. In a preferred execution of this embodiment, a second thin film resistor 8', being not subjected to the flexion of the membrane 4, is deposited on the body 15 of the mechanical assembly 6 and is operated as a serial resistor of the strain gauge of the pressure measurement element 2, thus compensating the signal of the strain gauge for variations with ambient temperature of the Young's modulus of the material forming the membrane 4. Electronic control means 18 among others for correlating the signals and controlling the CVGT are connected with the pressure measurement element 2 and the thin film resistors 8, 8' through electric connections 12 and 12', respectively.

With the knowledge of the temperature of the measurement assembly 6, the signal of the pressure measurement element 2 can be corrected for the influence of the zero point drift with temperature of the pressure measurement element 2, for the influence of the temperature coefficient of the Young's modulus of the stainless steel forming the membrane 4, and for the influence of the parasitic volume at the bottom side 5 of the membrane 4. Taking into account said corrections, the CVGT can be calibrated to temperature with an accuracy of 0.1% full scale even if the ambient temperature of the pressure measurement assembly 6 undergoes large variations. The benefit of such corrections becomes especially important for CVGT's with small gas cartridges 1 and/or long capillary tubes 3.

The measurement range of the CVGT is determined by the initial filling pressure at ambient temperature, the maximum admissible pressure (typically 20 MPa (200 bar)), and the minimum pressure allowing an accuracy according to specifications (typically 0.5 MPa (5 bar)). For example, a filling pressure of 10 MPa (100 bar) at 300 K will yield a typical measurement range of 15 K to 600 K, whereas a filling pressure of 50 MPa (50 bar) will yield a typical measurement range of 30 K to 1'200 K.

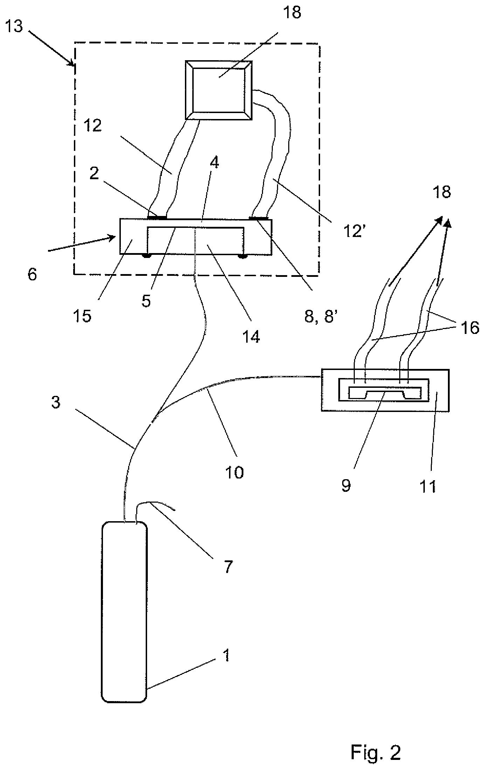

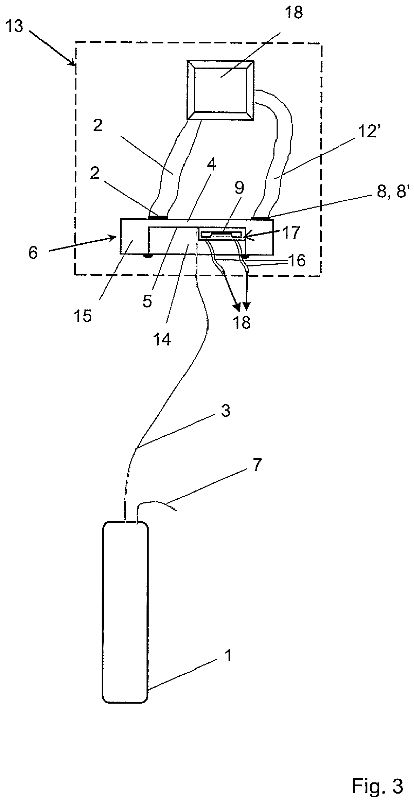

In an embodiment as pictured in Figure 2, a second pressure measurement device 9 is situated within a hermetically sealed second pressure measurement device enclosure 11, and the volume enclosed by said second pressure measurement device enclosure 11 is connected via a third capillary tube 10 to the first capillary tube 3. Appropriately sealed and insulated connectors 16 make electrical connections to the second measurement device 9 in the second pressure measurement devices enclosure 11 for a connection to electrical control means 18. In a preferred variation of this embodiment, pictured in Figure 3, the second pressure measurement device 9 is located in a cavity 17 underneath the membrane 4 of the mechanical assembly 6 forming the membrane 4.

The second pressure measurement device 9 is preferably a Pirani probe tailored to a helium pressure range from 10 kPa to 0.3 MPa (100 mbar to 3 bar). In an advantageous execution, the Pirani probe is a micro-machined silicon hotplate, which combines high sensitivity, high accuracy and minimum volume.

The CVGT of said second embodiment is advantageously filled with helium at a pressure of 13.5 MPa (135 bar) at room temperature. The scale of the first pressure measurement device 13 will then range from 5 K to 400 K, and the scale of the second measurement device 9 will start at the critical point of helium at 5.2 K and range down to below 1 K. The filling pressure of the gas and the measurement range of the second pressure measurement device 9 are adjusted such that the lower end of the measurement range of the first pressure measurement device 13, and the upper end of the measurement range of the second pressure measurement device 9 are both located at or near the critical point of the filling gas.

The CVGT of said second embodiment is therefore capable to measure temperatures from below 1 K up to 400 K with high accuracy.

### Figure Legend

1 - gas cartridge
2 - pressure measurement element
3 - first capillary tube
4 - membrane
5 - bottom side of membrane
6 - mechanical assembly forming the membrane
7 - second capillary tube
8, 8' - thin film resistor
9 - second pressure measurement device
10 - third capillary tube
11 - second pressure measurement device enclosure
12, 12'- electric connections
13 - first pressure measurement device
14 - capillary tube connecting element
15 - body
16 - electrical connections
17 - cavity
18 - electronic control unit

## Claims

1. A Constant Volume Gas Thermometer (CVGT) comprising a gas cartridge (1), a first pressure measurement device (13), and a first capillary tube (3), which connects the gas cartridge (1) to the first pressure measurement device (13), the first pressure measurement device (13) comprises a mechanical assembly (6) forming a membrane (4) wherein the first capillary tube communicates with the bottom side (5) of the membrane (4), a pressure measurement element (2) on the membrane (4) generating a signal in dependence of a deformation of the membrane (4), and electronic means (18) for correlating the signal of said pressure measurement element (2) to the temperature of the gas cartridge (1) **characterized by** a second pressure measurement device (9) connected either directly or indirectly to the gas cartridge (1) and means (18) to relate a signal of said second pressure measurement device (9) to the temperature of the gas cartridge (1), whereby the second pressure measurement device (9) is a Pirani sensor.

2. The thermometer according to claim 1, **characterized in that** the second pressure measurement device (9) is enclosed in a volume of a hermetically sealed enclosure (11) and the volume is connected through a second capillary tube (10) either directly or indirectly to the gas cartridge (1).

3. The thermometer according to claim 2, **characterized in that** the second pressure measurement device (9) is arranged in a cavity (17) situated on the bottom side (5) of the membrane (4).

4. The thermometer according to claim 1, **characterized in that** the pressure measurement element (2) is a resistive strain gauge deposited on the membrane (4).

5. The thermometer according to claim 1, **characterized in that** the pressure measurement element (2) is a piezoresistive strain gauge deposited on the membrane (4).

6. The thermometer according to claim 1, **characterized in that** a resistive thermometer (8) is deposited onto the mechanical assembly (6) forming the membrane (4), which measures the temperature of the mechanical assembly (6).

7. The thermometer according to claim 4 or 5, **characterized in that** a thin-film resistor (8') is arranged onto the mechanical assembly (6), which is operated electrically in series with the strain gauge (2) and of which its variation with temperature is used to compensate temperature effects on the signal of the strain gauge (2).

8. The thermometer according to any of the above claims, **characterized by** a capillary tube connecting element (14) at the bottom side (5) of the membrane (4) for providing communication of the first capillary tube (3) with the bottom side (5) of the membrane (4).

9. The thermometer according to any of the above claims, **characterized in that** the gas cartridge (1) contains pure helium.

10. The thermometer according to any of the above claims, **characterized in that** the gas cartridge (1) comprises a third capillary tube (7) for filling gas into the volume created by the gas cartridge (1), the first capillary tube (3), and the mechanical assembly (6).

## Patentansprüche

1. Gasthermometer mit konstantem Volumen (GTKV), umfassend eine Gaskartusche (1), eine erste Druckmessvorrichtung (13) und ein erstes Kapillarrohr (3), das die Gaskartusche (1) mit der ersten Druckmessvorrichtung (13) verbindet, wobei die erste Druckmessvorrichtung (13) eine mechanische Baugruppe (6) umfasst, die eine Membran (4) bildet, wobei das erste Kapillarrohr mit der Unterseite (5) der Membran (4) in Verbindung steht, wobei ein Druckmesselement (2) an der Membran (4) ein Signal in Abhängigkeit von einer Verformung der Membran (4) erzeugt, und elektronische Mittel (18) zum Korrelieren des Signals des Druckmesselements (2) mit der Temperatur der Gaskartusche (1), **gekennzeichnet durch** eine zweite Druckmessvorrichtung (9), die entweder direkt oder indirekt mit der Gaskartusche (1) verbunden ist, und Mittel (18) zum Verknüpfen eines Signals der zweiten Druckmessvorrichtung (9) mit der Temperatur der Gaskartusche (1), wobei die zweite Druckmessvorrichtung (9) ein Pirani-Vakuummeter ist.

2. Thermometer nach Anspruch 1, **dadurch gekennzeichnet, dass** die zweite Druckmessvorrichtung (9) in einem Volumen eines hermetisch dichten Gehäuses (11) eingeschlossen ist und das Volumen durch ein zweites Kapillarrohr (10) direkt oder indirekt mit der Gaspatrone (1) verbunden ist.

3. Thermometer nach Anspruch 2, **dadurch gekennzeichnet, dass** die zweite Druckmessvorrichtung (9) in einem Hohlraum (17) auf der Unterseite (5) der Membran (4) angeordnet ist.

4. Thermometer nach Anspruch 1, **dadurch gekennzeichnet, dass** das Druckmesselement (2) ein auf die Membran (4) aufgebrachter Widerstands-Dehnungsmessstreifen ist.

5. Thermometer nach Anspruch 1, **dadurch gekennzeichnet, dass** das Druckmesselement (2) ein piezoresistiver Dehnungsmessstreifen ist, der auf der Membran (4) aufgebracht ist.

6. Thermometer nach Anspruch 1, **dadurch gekennzeichnet, dass** ein Widerstandsthermometer (8) auf der die Membran (4) bildenden mechanischen Baugruppe (6) aufgebracht ist, das die Temperatur der mechanischen Baugruppe (6) misst.

7. Thermometer nach Anspruch 4 oder 5, **dadurch gekennzeichnet, dass** auf der mechanischen Baugruppe (6) ein Dünnschichtwiderstand (8') angeordnet ist, der elektrisch in Reihe mit dem Dehnungsmessstreifen (2) geschaltet ist und dessen Variation in Abhängigkeit von der Temperatur zur Kompensation von Temperatureinflüssen auf das Signal des Dehnungsmessstreifens (2) verwendet wird.

8. Thermometer nach einem der vorhergehenden Ansprüche, **gekennzeichnet durch** ein Kapillarrohrverbindungselement (14) an der Unterseite (5) der Membran (4) zum Bereitstellen einer Verbindung des ersten Kapillarrohrs (3) mit der Unterseite (5) der Membran (4).

9. Thermometer nach einem der vorhergehenden Ansprüche, **dadurch gekennzeichnet, dass** die Gaskartusche (1) reines Helium enthält.

10. Thermometer nach einem der vorhergehenden Ansprüche, **dadurch gekennzeichnet, dass** die Gaskartusche (1) ein drittes Kapillarrohr (7) zum Einfüllen von Gas in das von der Gaskartusche (1), dem ersten Kapillarrohr (3) und der mechanischen Baugruppe (6) erzeugte Volumen aufweist.

## Revendications

1. Thermomètre à gaz à volume constant (CVGT) comprenant une cartouche de gaz (1), un premier dispositif de mesure de pression (13) et un premier tube capillaire (3) qui relie la cartouche de gaz (1) au premier dispositif de mesure de pression (13), le premier dispositif de mesure de pression (13) comprenant un ensemble mécanique (6) formant une membrane (4), le premier tube capillaire communiquant avec le côté inférieur (5) de la membrane (4), un élément de mesure de pression (2) sur la membrane (4) générant un signal en fonction de la déformation de la membrane (4), et des moyens électroniques (18) pour corréler le signal dudit élément de mesure de pression (2) à la température de la cartouche de gaz (1), **caractérisé par** un deuxième dispositif de mesure de pression (9) relié directement ou indirectement à la cartouche de gaz (1) et des moyens (18) pour associer un signal dudit deuxième dispositif de mesure de pression (9) à la température de la cartouche de gaz (1), le deuxième dispositif de mesure de pression (9) étant un capteur Pirani.

2. Thermomètre selon la revendication 1, **caractérisé en ce que** le deuxième dispositif de mesure de pression (9) est enfermé dans un volume d'une enceinte (11) hermétiquement scellée et le volume est relié directement ou indirectement à la cartouche de gaz (1) par un deuxième tube capillaire (10).

3. Thermomètre selon la revendication 2, **caractérisé en ce que** le deuxième dispositif de mesure de pression (9) est disposé dans une cavité (17) située sur le côté inférieur (5) de la membrane (4).

4. Thermomètre selon la revendication 1, **caractérisé en ce que** l'élément de mesure de pression (2) est une jauge de contrainte résistive déposée sur la membrane (4).

5. Thermomètre selon la revendication 1, **caractérisé en ce que** l'élément de mesure de pression (2) est une jauge de contrainte piézorésistive déposée sur la membrane (4).

6. Thermomètre selon la revendication 1, **caractérisé en ce qu'**un thermomètre résistif (8) est déposé sur l'ensemble mécanique (6) formant la membrane (4), lequel mesure la température de l'ensemble mécanique (6).

7. Thermomètre selon la revendication 4 ou 5, **caractérisé en ce qu'**une résistance à couche mince (8') est disposée sur l'ensemble mécanique (6), laquelle fonctionne électriquement en série avec la jauge de contrainte (2) et dont la variation avec la température est utilisée pour compenser les effets de la température sur le signal de la jauge de contrainte (2).

8. Thermomètre selon l'une quelconque des revendications précédentes, **caractérisé par** un élément de raccordement de tube capillaire (14) sur le côté inférieur (5) de la membrane (4) pour permettre la communication du premier tube capillaire (3) avec le côté inférieur (5) de la membrane (4).

9. Thermomètre selon l'une quelconque des revendications précédentes, **caractérisé en ce que** la cartouche de gaz (1) contient de l'hélium pur.

10. Thermomètre selon l'une quelconque des revendications précédentes, **caractérisé en ce que** la cartouche de gaz (1) comprend un troisième tube capillaire (7) pour remplir de gaz le volume créé par la cartouche de gaz (1), le premier tube capillaire (3) et l'ensemble mécanique (6).
